# EUROPEAN PATENT SPECIFICATION

(11) **EP 2 288 126 B1**
(45) Date of publication and mention of the grant of the patent: **23.05.2012**
(21) Application number: 10161337.0
(22) Date of filing: 28.04.2010
(51) Int. Cl.: H04M 1/725, H04M 19/04, H04M 1/67

(54) **Mobile terminal and controlling method thereof**
Mobiles Endgerät und Steuerungsverfahren dafür
Terminal mobile et son procédé de contrôle

(30) Priority: 19.08.2009 KR 20090076644
(43) Date of publication of application: 23.02.2011
(73) Proprietor: LG ELECTRONICS INC., Yeongdeungpo-gu Seoul 150-721 (KR)
(72) Inventor: Choi, Jung Eun, 153-801, Seoul (KR)
(74) Representative: Cabinet Plasseraud

(56) References cited:
- EP-A1- 1 758 345
- EP-A1- 1 887 766
- US-A1- 2003 034 878
- US-A1- 2005 190 196
- US-A1- 2008 125 178
- US-A1- 2008 220 752

## Description

### Field of the invention

The present invention relates to a mobile terminal and corresponding method for informing a user of an unidentified communication event in various ways and making it easier for the user to check the unidentified communication event.

### Background of the invention

Generally, terminals can be classified into mobile/portable terminals and stationary terminals. Mobile terminals can also be classified into handheld terminals and vehicle mount terminals. Users can also play games, watch videos, listen to music, receive and send text messages, take pictures, etc. using their mobile terminal. Thus, mobile terminals function as multimedia players. Examples are disclosed by US2003/0034878 and US 2008/0 220752.

However, because the mobile terminals provide so many functions, it is often difficult for the user to keep track of events that have occurred on their mobile terminal.

### Summary of the invention

Accordingly, one object of the present invention is to address the above-noted and other problems of the related art.

Another object of the present invention is to provide a mobile terminal and corresponding method for informing a user about an occurrence of previous events on their mobile terminal.

Yet another object of the present invention is to provide a mobile terminal and corresponding method for informing a user about a type of an occurrence of previous events on their mobile terminal.

Still another object of the present invention is to provide a mobile terminal and corresponding method for making it easy for a user to conveniently check previous events that have occurred on their terminal and have not yet been reviewed by the user.

It will be appreciated by persons skilled in the art that that the objects that could be achieved with the present invention are not limited to what has been particularly described hereinabove and the above and other objects that the present invention could achieve will be more clearly understood from the following detailed description taken in conjunction with the accompanying drawings.

To achieve these objects and other advantages and in accordance with the purpose of the invention, as embodied and broadly described herein, the present invention provides in one aspect a mobile terminal as in claim 1. The present invention also provides a corresponding method of controlling the mobile terminal.

Accordingly, embodiments of the present invention provide several advantages. First, the mobile terminal informs the user of an unidentified event occurrence more effectively. Secondly, the user can be informed of a type of an unidentified event using at least one of a color and light-emitting pattern of a light emitting device provided to a key button. Thirdly, the user can easily check an unidentified event more conveniently.

In addition, the above-described methods can be implemented in a program recorded medium as computer-readable codes. The computer-readable media include all kinds of recording devices in which data readable by a computer system are stored such as ROM, RAM, CD-ROM, magnetic tapes, floppy discs, optical data storage devices, and the like.

It is to be understood that the advantages that can be obtained by the present invention are not limited to the aforementioned advantages and other advantages which are not mentioned will be apparent from the following description to the person with an ordinary skill in the art to which the present invention pertains.

### Brief description of the drawings

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile terminal according to one embodiment of the present invention;

FIG. 2A is a front perspective diagram of a mobile terminal according to one embodiment of the present invention;

FIG. 2B is a rear perspective diagram of a mobile terminal according to one embodiment of the present invention;

FIG. 3 is a front diagram of a mobile terminal for explaining one operational state of the mobile terminal according to one embodiment of the present invention;

FIG. 4 is a flowchart illustrating a method of indicating and checking an unidentified communication event of a mobile terminal according to one embodiment of the present invention;

FIG. 5 includes overviews of display screens illustrating an example of an operation related to an unidentified communication even of a mobile terminal according to one embodiment of the present invention;

FIG. 6 includes diagrams of light emitting patterns of a light emitting device provided to a vector pad according to one embodiment of the present invention;

FIG. 7 includes overviews of display screens illustrating an example of a user checking an unidentified communication event on a mobile terminal according to one embodiment of the present invention;

FIG. 8 is a diagram of a backlight unit using a direct-drop type light emitting diode according to an embodiment of the present invention; and

FIG. 9 includes diagrams illustrating an example of a light emitting pattern per type of an unidentified communication event using a backlight unit including light emitting diodes according to an embodiment of the present invention.

### Detailed description of the invention

In the following detailed description, reference is made to the accompanying drawing figures which form a part hereof, and which show by way of illustration specific embodiments of the invention. It is to be understood by those of ordinary skill in this technological field that other embodiments may be utilized, and structural, electrical, as well as procedural changes may be made without departing from the scope of the present invention. Wherever possible, the same reference numbers will be used throughout the drawings to refer to the same or similar parts.

The present invention can be applicable to a various types of terminals. Examples of such terminals include mobile as well as stationary terminals, such as mobile phones, user equipment, smart phones, DTV, computers, digital broadcast terminals, personal digital assistants, portable multimedia players (PMP) and navigators. However, by way of non-limiting example only, further description will be with regard to a mobile terminal 100, and it should be noted that such teachings may apply equally to other types of terminals.

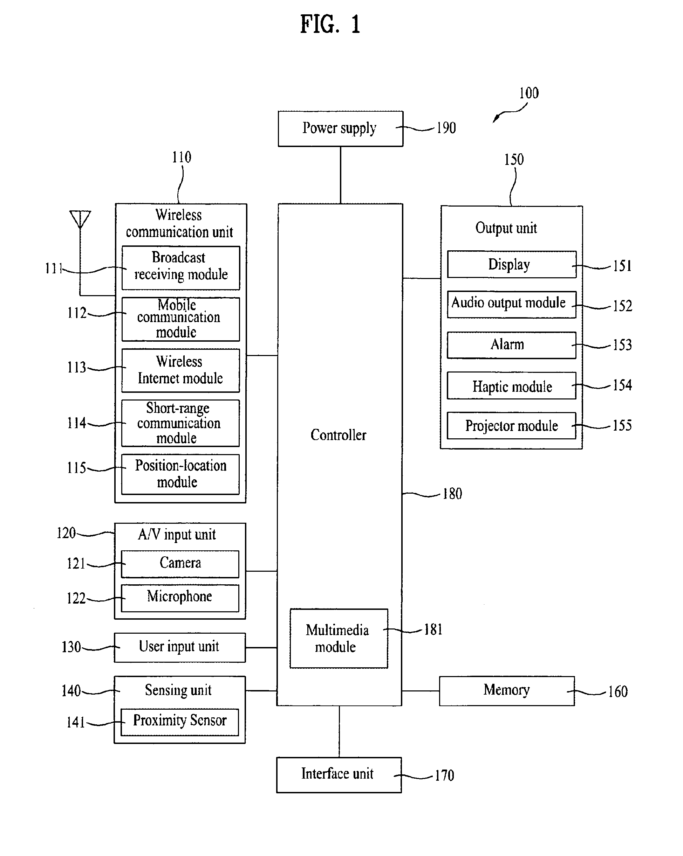

FIG. 1 is a block diagram of a mobile terminal 100 according to an embodiment of the present invention. As shown, the mobile terminal 100 includes a radio communication unit 110, an audio/video (A/V) input unit 120, a user input unit 130, a sensing unit 140, an output unit 150, a memory 160, an interface 170, a controller 180, and a power supply 190. Not all of the components shown in FIG. 1 are essential parts and the number of components included in the mobile terminal can be varied.

In addition, the radio communication unit 110 includes at least one module that enables radio communication between the mobile terminal 100 and a radio communication system or between the mobile terminal 100 and a network in which the mobile terminal 100 is located. For example, in FIG. 1, the radio communication unit 110 includes a broadcasting receiving module 111, a mobile communication module 112, a wireless Internet module 113, a short-range communication module 114 and a position information module 115.

The broadcasting receiving module 111 receives broadcasting signals and/or broadcasting related information from an external broadcasting management server through a broadcasting channel. Further, the broadcasting channel can include a satellite channel and a terrestrial channel. Also, the broadcasting management server can be a server that generates and transmits broadcasting signals and/or broadcasting related information or a server that receives previously created broadcasting signals and/or broadcasting related information and transmits the broadcasting signals and/or broadcasting related information to a terminal. The broadcasting signals can include not only TV broadcasting signals, radio broadcasting signals and data broadcasting signals, but also signals in the form of a combination of a TV broadcasting signal and a radio broadcasting signal.

In addition, the broadcasting related information can be information on a broadcasting channel, a broadcasting program or a broadcasting service provider. The broadcasting related information can be provided even through a mobile communication network. In this instance, the broadcasting related information can be received by the mobile communication module 112. The broadcasting related information can also exist in various forms. For example, the broadcasting related information can exist in the form of an electronic program guide (EPG) of the digital multimedia broadcasting (DMB) system or in the form of an electronic service guide (ESG) of the digital video broadcast-handheld (DVB-H) system.

In addition, the broadcasting receiving module 111 receives broadcasting signals using various broadcasting systems. In particular, the broadcasting receiving module 111 can receive digital broadcasting signals using digital broadcasting systems such as the digital multimedia broadcasting-terrestrial (DMB-T) system, the digital multimedia broadcasting-satellite (DMB-S) system, the media forward link only (MediaFLO) system, and the DVB-H and integrated services digital broadcast-terrestrial (ISDB-T) system. The broadcasting receiving module 111 can also be constructed to be suited to broadcasting systems providing broadcasting signals other than the above-described digital broadcasting systems. The broadcasting signals and/or broadcasting related information received through the broadcasting receiving module 111 can also be stored in the memory 160.

Further, the mobile communication module 112 transmits/receives a radio signal to/from at least one of a base station, an external terminal, and a server on a mobile communication network. The radio signal can include a voice call signal, a video telephony call signal or data in various forms according to transmission and receiving of text/multimedia messages. The wireless Internet module 113 corresponds to a module for wireless Internet access and can be included in the mobile terminal 100 or externally attached to the mobile terminal 100. Wireless LAN (WLAN) (Wi-Fi), wireless broadband (Wibro), world interoperability for microwave access (Wimax), high speed downlink packet access (HSDPA) and so on can be used as a wireless Internet technique. The short-range communication module 114 corresponds to a module for local area communication. Bluetooth, radio frequency identification (RFID), infrared data association (IrDA), ultra wideband (UWB) and ZigBee can be used as a local area communication technique.

In addition, the position information module 115 confirms or obtains the position of the mobile terminal 100. A global positioning system (GPS) module is a representative example of the position information module 115. Further, the GPS module 115 can calculate information on distances between one point (object) and at least three satellites and information on the time when the distance information is measured and apply trigonometry to the obtained distance information to obtain three-dimensional position information on the point (object) according to latitude, longitude and altitude coordinates at a predetermined time. Furthermore, a method of calculating position and time information using three satellites and correcting the calculated position and time information using another satellite is also used. In addition, the GPS module 115 continuously calculates the current position in real time and calculates velocity information using the position information.

Referring to FIG. 1, the A/V input unit 120 is used to input an audio signal or a video signal and includes a camera 121 and a microphone 122. The camera 121 processes image frames of still images or moving images obtained by an image sensor in a video telephony mode or a photographing mode. The processed image frames can be displayed on a display 151 included in the output unit 150. In addition, the image frames processed by the camera 121 can be stored in the memory 160 or transmitted to an external device through the radio communication unit 110. The mobile terminal 100 can also include at least two cameras according to constitution of the terminal.

Further, the microphone 122 receives an external audio signal in a call mode, a recording mode or a speed recognition mode and processes the received audio signal into electric audio data. The audio data can also be converted into a form that can be transmitted to a mobile communication base station through the mobile communication module 112 and output in the call mode. The microphone 122 can employ various noise removal algorithms for removing noise generated when the external audio signal is received.

In addition, the user input unit 130 receives input data for controlling the operation of the terminal from a user. The user input unit 130 can include a keypad, a dome switch, a touch pad (constant voltage/capacitance), jog wheel, jog switch and so on. The sensing unit 140 senses the current state of the mobile terminal 100, such as an open/close state of the mobile terminal 100, the position of the mobile terminal 100, whether a user touches the mobile terminal 100, the direction of the mobile terminal 100 and acceleration/deceleration of the mobile terminal 100 and generates a detection signal for controlling the operation of the mobile terminal 100. For example, the sensing unit 140 can sense whether a slide phone is opened or closed when the mobile terminal 100 is the slide phone. Furthermore, the sensing unit 140 can sense whether the power supply 190 supplies power and whether the interface 170 is connected to an external device. The sensing unit 140 can also include a proximity sensor 141.

In addition, the output unit 150 generates visual, auditory or tactile output and in Fig. 1 includes the display 151, an audio output module 152, an alarm 153, a haptic module 154, and a projector module 155. The display 151 displays information processed by the mobile terminal 100. For example, the display 151 displays a UI or graphic user interface (GUI) related to a telephone call when the mobile terminal is in the call mode. The display 151 also displays a captured or/and received image, UI or GUI when the mobile terminal 100 is in the video telephony mode or the photographing mode.

The display 151 can also include at least one of a liquid crystal display, a thin film transistor liquid crystal display, an organic light-emitting diode display, a flexible display and a three-dimensional display. Some of these displays can be of a transparent type or a light transmission type, which is referred to as a transparent display. The transparent display also includes a transparent liquid crystal display. The rear structure of the display unit 151 can also be of the light transmission type. According to this structure, a user can see an object located behind the body of the mobile terminal 100 through an area of the body of the mobile terminal 100, which is occupied by the display 151.

Further, the mobile terminal 100 can include at least two displays 151 according to constitution of the terminal. For example, the mobile terminal 100 can include a plurality of displays that are arranged on a single face at a predetermined distance or integrated. Otherwise, the plurality of displays can be arranged on different sides. In addition, when the display 151 and a sensor sensing touch (referred to as a touch sensor hereinafter) form a layered structure, which is referred to as a touch screen hereinafter, the display 151 can be used as an input device in addition to an output device. The touch sensor can be in the form of a touch film, a touch sheet and a touch pad, for example.

Also, the touch sensor can be constructed such that it converts a variation in pressure applied to a specific portion of the display 151 or a variation in capacitance generated at a specific portion of the display 151 into an electric input signal. The touch sensor can also be constructed such that it can sense pressure of touch as well as the position and area of touch. When touch input is applied to the touch sensor, a signal corresponding to the touch input is transmitted to a touch controller. The touch controller then processes the signal and transmits data corresponding to the processed signal to the controller 180. Accordingly, the controller 180 can detect a touched portion of the display 151.

Referring to FIG. 1, the proximity sensor 141 can be located in an internal region of the mobile terminal 100, surrounded by the touch screen, or near the touch screen. The proximity sensor 141 senses an object approaching a predetermined sensing face or an object located near the proximity sensor 141 using an electromagnetic force or infrared rays without having mechanical contact. Further, the proximity sensor 141 has a lifetime longer than that of a contact sensor and has wide application. The proximity sensor 141 also includes a transmission type photo-electric sensor, a direct reflection type photo-electric sensor, a mirror reflection type photo-electric sensor, a high-frequency oscillating proximity sensor, a capacitive proximity sensor, a magnetic proximity sensor, an infrared proximity sensor, etc.

In addition, a capacitive touch screen is constructed such that a proximity of a pointer is detected through a variation in an electric field according to the proximity of the pointer. In this instance, the touch screen (touch sensor) can be classified as a proximity sensor. For convenience of explanation, an action of approaching the pointer to the touch screen while the pointer is not in contact with the touch screen such that the location of the pointer on the touch screen is recognized is referred to as a "proximity touch" and an action of bringing the pointer into contact with the touch screen is referred to as a "contact touch" in the following description. Also, a proximity touch point of the pointer on the touch screen means a point of the touch screen to which the pointer corresponds perpendicularly to the touch screen when the pointer proximity-touches the touch screen.

Further, the proximity sensor 141 senses a proximity touch and a proximity touch pattern (for example, a proximity touch distance, a proximity touch direction, a proximity touch velocity, a proximity touch time, a proximity touch position, a proximity touch moving state, etc.). Information corresponding to the sensed proximity touch action and proximity touch pattern can also be displayed on the touch screen.

Also, the audio output module 152 can output audio data received from the radio communication unit 110 or stored in the memory 160 in a call signal receiving mode, a telephone call mode or a recording mode, a speech recognition mode and a broadcasting receiving mode. The audio output module 152 also outputs audio signals related to functions (for example, a call signal incoming tone, a message incoming tone, etc.) performed in the mobile terminal 100. The audio output module 152 can include a receiver, a speaker, a buzzer, etc.

The alarm 153 outputs a signal for indicating a generation of an event of the mobile terminal 100. Examples of events generated in the mobile terminal 100 include receiving a call signal, receiving a message, inputting a key signal, inputting touch, etc. The alarm 153 can also output signals in forms different from video signals or audio signals, for example, a signal for indicating a generation of an event through vibration. The video signals or the audio signals can also be output through the display unit 151 or the audio output module 152.

In addition, the haptic module 154 generates various haptic effects that the user can feel. A representative example of the haptic effects is vibration. The intensity and pattern of vibration generated by the haptic module 154 can also be controlled. For example, different vibrations can be combined and output or sequentially output. The haptic module 154 can also generate a variety of haptic effects including an effect of stimulus according to an arrangement of pins vertically moving for a contact skin face, an effect of stimulus according to a jet force or sucking force of air through a jet hole or a sucking hole, an effect of stimulus of rubbing the skin, an effect of stimulus according to contact of an electrode, an effect of stimulus using an electrostatic force and an effect according to reproduction of cold and warmth using an element capable of absorbing or radiating heat in addition to vibrations. Further, the haptic module 154 can not only transmit haptic effects through direct contact but also allow the user to feel haptic effects through kinesthetic sense of his or her fingers or arms. The mobile terminal 100 can also include at least two or more haptic modules 154 according to constitution of the mobile terminal.

The projector module 155 is an element for performing an image projector function using the mobile terminal 100. That is, the projector module 155 can display an image, which is identical to or partially different at least from the image displayed on the display 151, on an external surface such as a wall or screen according to a control signal of the controller 180. In particular, the projector module 155 includes a light source generating light (e.g., laser) for projecting an image, an image producing unit for producing an image to be projected using the light generated from the light source, and a lens for enlarging the image to be projected in a predetermined focus distance. In addition, the projector module 155 can include an adjustment device for adjusting an image projected direction by mechanically moving the lens or the whole module.

Further, the projector module 155 can be classified into a CRT (cathode ray tube) module, an LCD (liquid crystal display) module, a DLP (digital light processing) module or the like according to a device type of a display mechanism. In particular, the DLP module is operated by the mechanism of enabling the light generated from the light source to reflect on a DMD (digital micro-mirror device) chip and can be advantageous for the downsizing of the projector module 151. Preferably, the projector module 155 can be provided in a length direction of a lateral, front or backside direction of the mobile terminal 100. The projector module 155 can also be provided to any portion of the mobile terminal 100.

In addition, the memory 160 stores a program for the operation of the controller 180 and temporarily stores input/output data (for example, phone book, messages, still images, moving images, etc.). The memory 160 can also store data about vibrations and sounds in various patterns, which are output when a touch input is applied to the touch screen. The memory 160 can include at least one of a flash memory, a hard disk type memory, a multimedia card micro type memory, a card type memory (for example, SD or XD memory), a random access memory (RAM), a static RAM (SRAM), a read-only memory (ROM), an electrically erasable programmable ROM (EEPROM), a programmable ROM (PROM) magnetic memory, a magnetic disk and an optical disk. The mobile terminal 100 can also operate in relation to a web storage performing the storing function of the memory 160 on the Internet.

Further, the interface 170 serves as a path to all external devices connected to the mobile terminal 100. The interface 170 receives data or power from the external devices and transmits the data or power to the internal components of the mobile terminal 100 or transmits data of the mobile terminal 100 to the external devices. The interface 170 can also include a wired/wireless headset port, an external charger port, a wired/wireless data port, a memory card port, a port for connecting a device having a user identification module, an audio I/O port, a video I/O port, an earphone port, etc., for example.

In addition, an identification module is a chip that stores information for authenticating the authority to use the mobile terminal 100 and can include a user identify module (UIM), a subscriber identify module (SIM) and a universal subscriber identify module (USIM). A device (referred to as an identification device hereinafter) including the identification module can be manufactured in the form of a smart card. Accordingly, the identification device can be connected to the mobile terminal 100 through a port.

Also, the interface 170 can serve as a path through which power from an external cradle is provided to the mobile terminal 100 when the mobile terminal 100 is connected to the external cradle or a path through which various command signals input by the user through the cradle to the mobile terminal 100. The various command signals or power input from the cradle can be used as a signal for confirming whether the mobile terminal 100 is correctly set in the cradle.

The controller 180 controls the overall operation of the mobile terminal. For example, the controller 180 performs control and processing for voice communication, data communication and video telephony. In FIG. 1, the controller 180 includes a multimedia module 181 for playing multimedia. The multimedia module 181 can be included in the controller 180 or separated from the controller 180. Further, the controller 180 can perform a pattern recognition process capable of recognizing handwriting input or picture-drawing input applied to the touch screen as characters or images. In addition, the power supply 190 receives external power and internal power and provides power required for the operations of the components of the mobile terminal under the control of the controller 180.

Further, various embodiments of the present invention can be implemented in a computer or similar device readable recording medium using software, hardware or a combination thereof, for example. According to a hardware implementation, the embodiments of the present invention can be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electrical units for executing functions. The embodiments can also be implemented by the controller 180.

According to a software implementation, embodiments such as procedures or functions can be implemented with a separate software module executing at least one function or operation. Software codes can be implemented according to a software application written in an appropriate software language. Furthermore, the software codes can be stored in the memory 160 and executed by the controller 180.

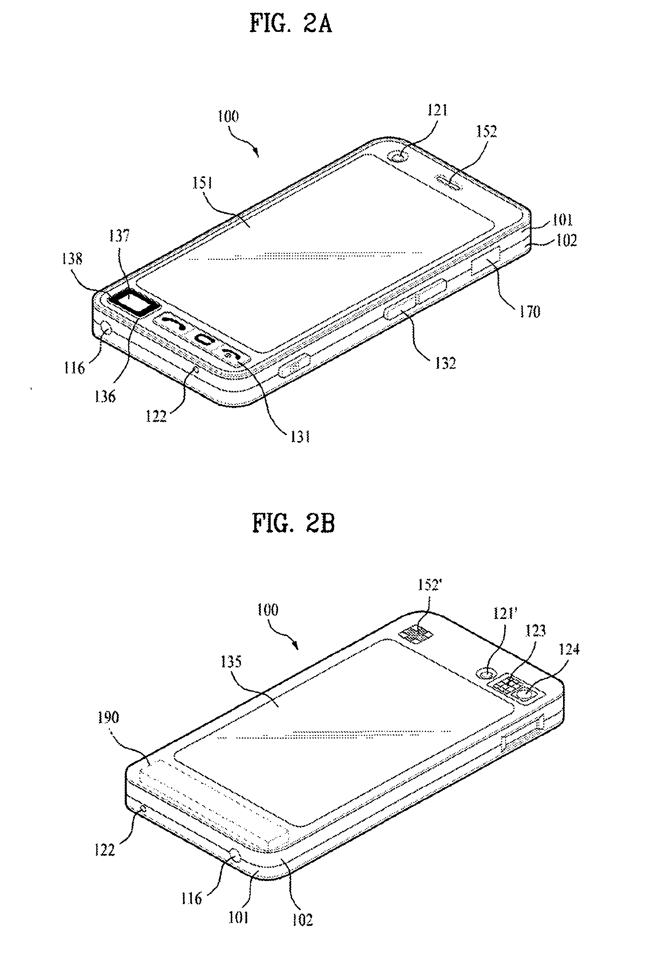

Next, FIG. 2A is a front perspective view of a mobile terminal or a handheld terminal 100 according to an embodiment of the present invention. As shown, the mobile terminal 100 is a bar type terminal body. However, the present invention is not limited to a bar type terminal and can be applied to terminals of various types including a slide type, folder type, swing type and swivel type terminals having at least two bodies that are relatively movably combined.

In addition, the terminal body includes a case (a casing, a housing, a cover, etc.) forming the exterior of the terminal 100. In the present embodiment, the case is divided into a front case 101 and a rear case 102. Various electronic components are also arranged in the space formed between the front case 101 and the rear case 102. At least one middle case can be additionally arranged between the front case 101 and the rear case 102. The cases can also be formed of plastics through injection molding or be made of a metal material such as stainless steel (STS) or titanium (Ti).

In addition, the display 151, the audio output unit 152, the camera 121, user input units 131 and 132 of the user input unit 130 (FIG. 1), the microphone 122 and the interface 170 are arranged in the terminal body, specifically, in the front case 101. Also, the display 151 occupies most part of the main face of the front case 101. The audio output unit 152 and the camera 121 are arranged in a region in proximity to one of both ends of the display 151 and the user input unit 131 and the microphone 122 are located in a region in proximity to the other end of the display 151. In addition, the user input unit 132 and the interface 170 are arranged on the sides of the front case 101 and the rear case 102.

Further, the user input unit 130 is operated to receive commands for controlling the operation of the handheld terminal 100 and can include the operating units 131 and 132. The operating units 131 and 132 can be referred to as manipulating portions and employ any tactile manner in which a user operates the operating units 131 and 132 while having tactile feeling. The operating units 131 and 132 can also receive various inputs. For example, the operating unit 131 receives commands such as start, end and scroll, and the second operating unit 132 receives commands such as control of the volume of sound output from the audio output unit 152 or conversion of the display 151 to a touch recognition mode. A broadcast antenna 116 can also be included in the mobile terminal 100.

Next, FIG. 2B is a rear perspective view of the mobile terminal 100 shown in FIG. 2A according to an embodiment of the present invention. Referring to FIG. 2B, a camera 121' is additionally attached to the rear side of the terminal body, that is, the rear case 102. The camera 121' has a photographing direction opposite to that of the camera 121 shown in FIG. 2A and can have pixels different from those of the camera 121 shown in FIG. 2A. For example, it is preferable that the camera 121 has low pixels such that it can capture an image of the face of a user and transmit the image to a receiving part for video telephony, while the camera 121' has high pixels because it captures an image of a general object and does not immediately transmit the image in many instances. The cameras 121 and 121' can also be attached to the terminal body such that they can be rotated or pop-up.

A flash bulb 123 and a mirror 124 are also arranged in proximity to the camera 121'. The flash bulb 123 lights an object when the camera 121' takes a picture of the object, and the mirror 124 is used for the user to look at his/her face in the mirror when the user wants to self-photograph himself/herself using the camera 121'. An audio output unit 152' is also provided on the rear side of the terminal body. The audio output unit 152' can thus achieve a stereo function with the audio output unit 152 shown in FIG. 2A and be used for a speaker phone mode when the terminal is used for a telephone call.

A broadcasting signal receiving antenna 124 is also attached to the side of the terminal body in addition to an antenna for telephone calls. The antenna 124 constructing a part of the broadcasting receiving module 111 shown in FIG. 1 can be set in the terminal body such that the antenna 124 can be retracted from the terminal body. Further, the power supply 190 for providing power to the handheld terminal 100 is set in the terminal body. The power supply 190 can be included in the terminal body or detachably attached to the terminal body.

A touch pad 135 for sensing touch is also attached to the rear case 102. The touch pad 135 can be of a light transmission type as the display 151. In this instance, if the display 151 outputs visual information through both sides thereof, the visual information can be recognized through the touch pad 135. The information output through both sides of the display 151 can also be controlled by the touch pad 135. Otherwise, a display is additionally attached to the touch pad 135 such that a touch screen can be arranged even in the rear case 102.

The touch pad 135 also operates in connection with the display 151 of the front case 101. The touch pad 135 can be located in parallel with the display 151 behind the display 151, and can be identical to or smaller than the display 151 in size.

A third manipulating unit 136 in FIG. 2A includes a first button 137 provided to a center of the third manipulating unit and a second key button 138 enclosing the first button 137. Further, the first button 137 can include a general push button, a touch pad or a track pad configured to recognize a touch. When the first button 137 is the push button, the first button 137 includes at least one rotational shaft to receive an input of a scroll command. A small display device such as a small LCD, a plurality of small-scale LEDs having a prescribed arrangement and the like is also provided to the first button 137 to display a simple symbol, sign, a figure and/or the like thereon.

In order to perform functions of a navigation key, the second button 138 can distinctively recognize a pressure change, a light intensity change or an electrostatic capacity change according to at least 4-directional contact (up, down, left and right). In addition, the second button 138 can simultaneously recognize at least two directions. In other words, the second button 138 can operate as a pressure-sensitive type, which responds to a pressure applied in a random direction. Alternatively, the second button 138 can operate as a photosensitive type, which responds to an intensity of light reaching at least one portion of the second button by a shadow according to a proximity of such a pointer as a finger, a stylus pen and the like or a change of a light-applied pattern. Alternatively, the second button can be implemented as a general button of an electrostatic capacity type.

For instance, when a cursor displayed on the display unit 151 is manipulated, if an upper portion of the second button 138 and a right portion of the second button 138 are simultaneously touched, the cursor diagonally moves in a right upper direction. The second button 138 can also recognize a pressure applied in each direction or a contact size by discriminating it by at least two steps. In particular, if a user applies a first pressure in one direction on manipulating a cursor, the cursor moves at a first speed. If a second pressure greater than the first pressure is applied, the cursor moves at a second speed higher than the first speed. Hence, a user can move a cursor or select a menu by controlling a direction and pressure when pressing the second button 138 more conveniently than using a general navigation key. Optionally, the second button 138 can be formed of a light-transmittive material and provided with a light emitting device loaded therein, thereby bringing about various visual effects. The light emitting device can also include at least one light emitting diode (LED) or a plurality of light emitting diodes differing from one another in color, which can emit lights in a plurality of colors or a flickering pattern under the control of the controller 180. In the following description, the third manipulating unit 136 including the first button 137 and the second button 138 are named a 'vector pad' for clarity and convenience.

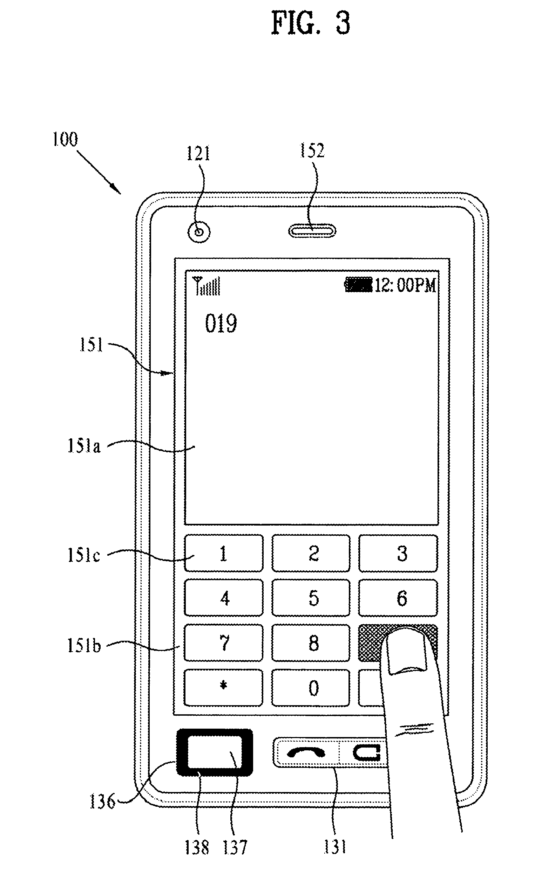

An interconnected operational mechanism between the display 151 and the touchpad 135 will now be explained with reference to FIG. 3, which illustrates a front view of the mobile terminal 100 according to an embodiment of the present invention.

As shown in FIG. 3, various types of visual information such as characters, numerals, symbols, graphics, icons, etc. can be displayed on the display 151. The characters, numerals, symbols, graphics and icons are also provided in a single predetermined array to form a keypad. The keypad formation can also be called 'soft keys'.

The display 151 is also operable through an entire area or can be divided into a plurality of regions, which interoperate with each other. In FIG. 3, the display 151 includes an output window 151a and an input window 151b. The input window 151b also includes a soft key 151c' representing a digit for inputting a phone number or the like. Thus, if the user touches the soft key 151c', the controller 180 displays the digit corresponding to the touched soft key on the output window 151a. The user can then manipulate the first manipulating unit 131 to call the phone number displayed on the output window 151a.

In addition, information displayed on the display 151 or the touchpad 135 can be scrolled by shifting a cursor or pointer located at an entity (e.g., icon or the like). Furthermore, when the user shifts or drags their finger on the display 151 or the touchpad 135, the controller 180 can display a path of the shifted finger on the display 151. This may be useful when the user is editing an image displayed on the display 151, for example.

Also, when both of the display 151 and the touchpad 135 are touched together within a predetermined time range, the controller 180 can execute a particular function of the terminal. For example, the user can clasp or clamp the terminal body using their thumb and first finger to execute a predetermined function such as activating or deactivating the display 151 and/or the touchpad 135.

Further, a 'pointer' or 'cursor' is often displayed as an arrow on the display unit. Thus, to discriminate between the terms 'pointer' and 'cursor', the term 'cursor' will be defined as an element or figure that is displayed on the display unit to indicate a specific position, and the term 'pointer' will be defined as the user's finger, a stylus pen, etc., which is used to physically apply a contact touch or a proximity touch to a specific point of a touchscreen.

FIG. 3 also illustrates the mobile terminal including the vector pad 136 having the first and second buttons 137 and 138. These buttons are used in various ways to inform the user about a previous event that has occurred on their terminal (e.g., missed incoming call). The vector pad 136 will be described in more detail throughout the description of the present application.

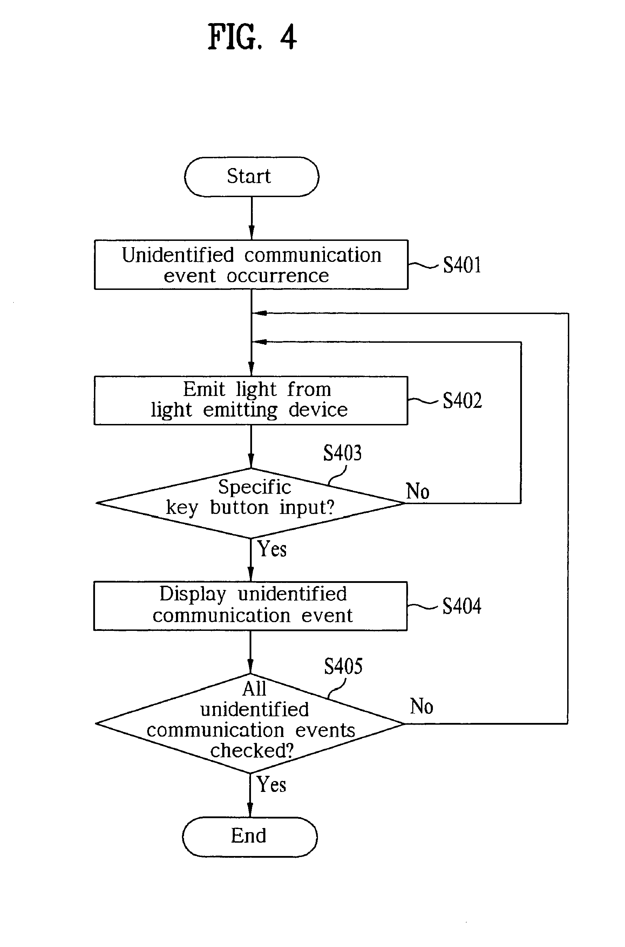

Next, FIG. 4 is a flowchart illustrating a method of indicating and checking an unidentified communication event of a mobile terminal according to one embodiment of the present invention. As shown, the mobile terminal 100 receives a signal indicating an unidentified communication event has occurred on the terminal (S401).

In addition, the unidentified communication event includes a communication event that the user has not acknowledged such as a short text message (SMS) received via the wireless communication unit 100, a multimedia message (MMS), a voice mail, an email, a voice call, a video call and the like. That is, the unidentified communication event includes the user not checking a received short text message (SMS), a received multimedia message (MMS), a received voice mail, a received email or the like. The unidentified event also includes bidirectional communication that has not been established because the user has not responded to an incoming voice or video call.

Then, when an unidentified even has occurred, the controller 180 drives a light emitting device provided to the vector pad 136 to emit light in different patterns or colors to visually inform the user of a presence of the unidentified communication event (S402). Further, the controller 180 drives the light emitting device to emit light in a different color or pattern according to the type of the unidentified communication event.

For instance, when the unidentified communication event is a text message, the controller 180 drives the light emitting device to emit blue light, and when the unidentified communication event is a voice call, the controller 180 drives the light emitting device to emit red light. In another example, when the unidentified communication event is a text message, the controller 180 drives the light emitting device to periodically flicker, and when the unidentified communication event is a voice call, the controller 180 drives the light emitting device to constantly emit light. The user can also set what color is to be emitted for what event using the appropriate menu options provided on the mobile terminal of the present invention.

In addition, if at least two types of unidentified communication events simultaneously exist, the controller 180 drives the light emitting device to alternately provide a color or light emitting pattern corresponding to each event or provide a third color or light emitting pattern. Then, as shown in FIG. 4, when the light emitting device is activated, and the user inputs a specific button through the user input unit 130 (Yes in S403), the controller 180 displays the unidentified communication event on the display unit 151 (S404).

Further, if a plurality of different unidentified communication events exist, the controller 180 can display the unidentified communication events in order of occurrence irrespective of the types, according to a user-set priority per type of the unidentified communication event or per originator of the unidentified communication event. Also, when the user identifies one of the displayed unidentified communication events, the controller 180 can automatically display an event having a next highest or lowest priority. In addition, the list displaying order or checking order is just an example and a priority can be set according to various references or by a group unit.

Meanwhile, after the user has checked the unidentified communication event, the controller 180 determines whether there is a remaining unidentified communication event (S405). When all remaining unidentified communication events have not been checked (No in S405), the controller 180 drives the light emitting device of the vector pad 136 to emit light in a predetermined color or light emitting pattern corresponding to the remaining unidentified communication event. That is, in one embodiment of the present invention, the controller 180 informs the user about the unidentified event using the first and second buttons 137 and 138 of the vector pad 136. These features will be explained in more detail later.

Further, when the mobile terminal 100 includes a touchscreen, the controller 180 can lock the touchscreen to prevent recognition of any unintended touch input on the touchscreen. For example, if the user does not touch the touchscreen for a predetermined duration or a predetermined time passes after occurrence of an unidentified communication event, the controller 180 locks the touchscreen. The user can then unlock the touchscreen by manipulating a hardware key (e.g., a hold key, a touch unlock button, etc.).

The controller 180 can also unlock the touchscreen when the user checks a displayed unidentified communication event, and again lock the touchscreen after the user has checked the unidentified communication event. Thus, the user does not have to perform cumbersome operations for locking and unlocking the touchscreen when checking the unidentified communication event.

The user can also use only the vector pad 136 to check an unidentified communication event when the touchscreen is locked. In particular, after the controller 180 displays an unidentified communication event according to the user's input via the vector pad 136, and if the user makes an input (e.g., contact, push, scroll, etc.) via the vector pad again 136, the controller 180 can sequentially display unidentified communication events. Thus, because the user does not manipulate the touchscreen to check the unidentified communication event, the continuous locking and unlocking of the touchscreen can be avoided. Further, the methods of unlocking the touchscreen lock and checking the unidentified communication event using the vector pad are usable by being combined together.

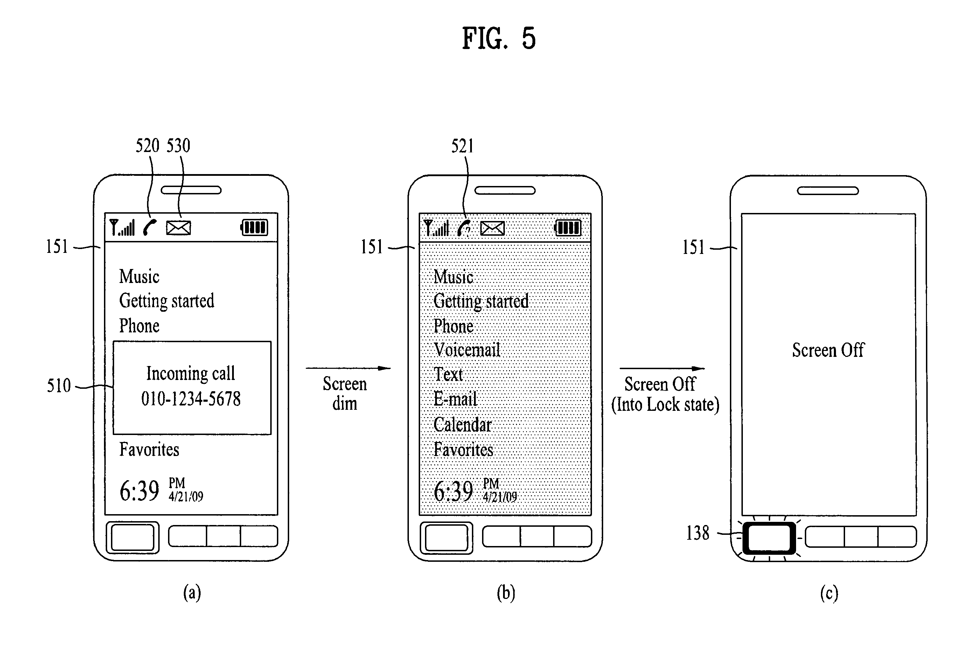

A method of indicating and checking the unidentified communication event in the mobile terminal will now be explained with reference to FIGs. 5 to 7. In particular, FIG. 5 includes overviews of display screens illustrating an example of an operation related to unidentified communication events occurring on the mobile terminal according to one embodiment of the present invention.

As shown in FIG. 5(a), when an incoming voice call is received via the wireless communication unit 110, the controller 180 displays information 510 identifying the caller on a portion of the display 151. The controller 180 can also display a phone-shape icon 520 indicating an incoming voice call has been received and a mail letter-shape icon 530 indicating a presence of an unidentified text message on an indicator area provided to a top side of the display 151.

As shown in FIG. 5(b), when the user does not answer the incoming voice call, the voice call session is not established and the controller 180 changes the icon 520 into an icon 521 indicating that there is a missed call. Moreover, the controller 180 dims the display 151 to save power. Also, if the user does not perform an input operation while the display 151 is dim or getting dimmer, the controller 180 turns off the display 151 as shown in FIG. 5(c). The controller 180 also drives a light emitting device of the second button 138 of the vector pad 136 to emit light and thereby inform the user that a missed call exists. Further, to prevent a malfunction, the controller 180 can lock the touchscreen as discussed above.

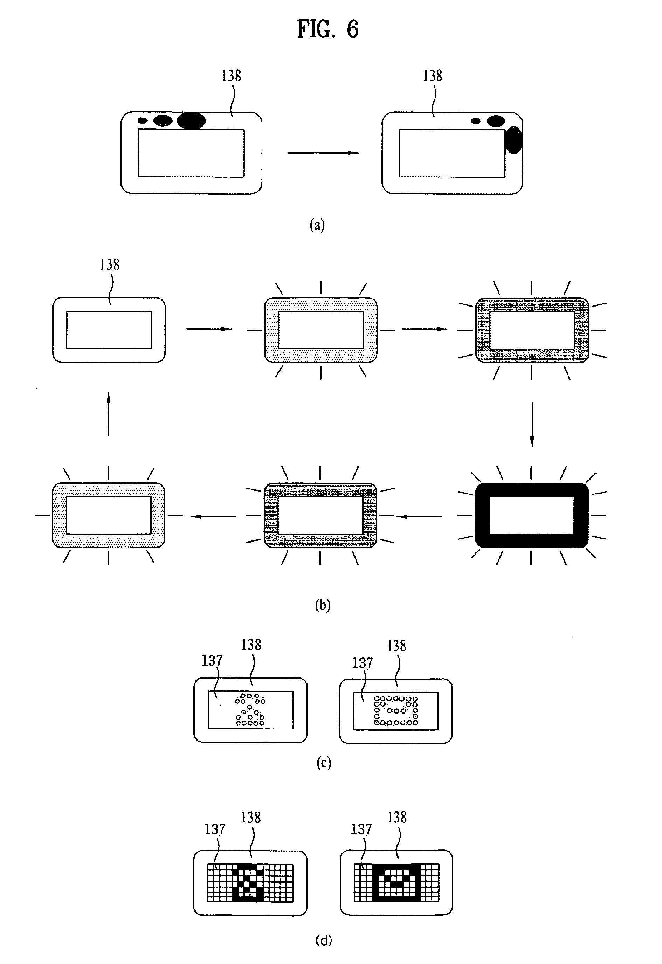

Next, FIG. 6 includes diagrams illustrating different light emitting patterns of a light emitting device for the vector pad 136 according to one embodiment of the present invention. As shown in FIG. 6(a), the light emitting device is arranged along a shape of the second button 138 and includes a light-transmittive material. The controller 180 also drives the light emitting device to emit light in a shape rotating in one direction. Further, as shown in FIG. 6(b), the controller 180 can drive the light emitting device to emit light in a fade-in & fade-out pattern (e.g., the emitted light gets brighter and then gradually dimmer).

FIG. 6(c) illustrates the first button 137 including a plurality of small LEDs. Thus, the controller 180 can display a simple figure indicating a type of an unidentified communication event by driving particular LEDs to emit light. In particular, FIG. 6(c) illustrates the controller 180 driving the LEDS to make a shape of a phone and a mail message. When the first button 137 includes an LCD, the controller 180 can drive the LCD to make the shapes shown in FIG. 6(d), for example. The figure display of the first button 137 can be used together with the light emitting patterns of the second button 138 shown in FIG. 6, for example.

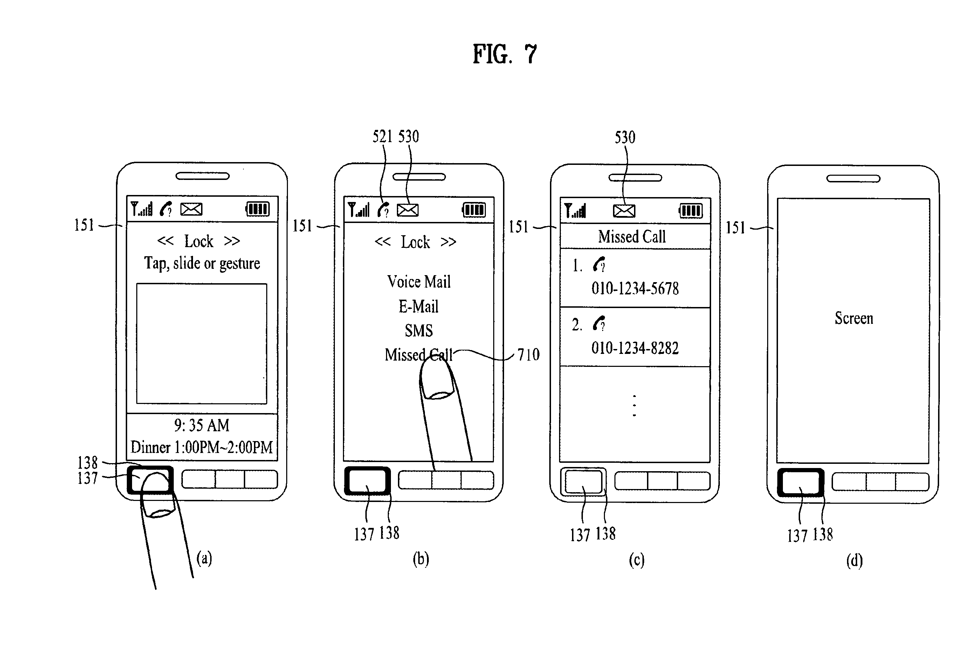

Next, FIG. 7 includes overviews of display screens illustrating an example of a user checking an unidentified communication event on a mobile terminal according to one embodiment of the present invention. FIG. 7 also illustrates a state of the mobile terminal 100 the state shown in FIG. 5(c). FIG. 7 also illustrates an unanswered voice call (i.e., a missed call) and a text message that have not been acknowledged by the user. Thus, the controller 180 drives the light emitting device of the vector pad 136 and/or a small display device of the first button 137 to emit light in colors or patterns corresponding to the missed call and the text message, respectively. Further, the controller 180 has touch-locked the touchscreen.

In addition, if the user touches or manipulates the user input unit 130 different from the vector pad 136, i.e., either a touchscreen or a hardware button is manipulated, the controller 180 displays an icon indicating the touch lock mode is set and how to unlock the touch lock mode. FIG. 7(a) illustrates one example of informing the user about the touch lock mode. Further, until the user unlocks the touch lock mode by one of methods displayed on the display 151, the controller 180 deactivates other functions.

However, if the user touches the first button 137 of the vector pad 136 as shown in FIG. 7(a), the controller 180 displays the unidentified communication events on the display unit 151 as shown in FIG. 7(b). That is, even though the touch lock mode is not unlocked, the controller 180 does not apply the touch lock mode to the functions related to the unidentified communication events. Hence, the user can easily check unidentified communication events using the vector pad 136 without having to separately unlock the touch lock mode.

In addition, while the unidentified communication events are displayed on the display 151, the controller 180 can recognize other inputs (e.g., touch, push, scroll, etc.) from the user via the vector pad 136. Thus, the user can use only the vector pad 136 for checking and reading missed events. For example, the controller 180 can display a cursor on the display unit 151 that moves in response to user touching or manipulating the second button 138. Thus, when the controller 180 is displaying a plurality of unidentified communication events on the display 151, the user can move the cursor to a specific unidentified communication event and then select the corresponding unidentified communication event through an input made via the first button 137.

Moreover, when the controller 180 does not display a separate cursor, the user can check an unidentified communication event by manipulating the first button 137. For instance, if there is only an unidentified communication event of one type, the user can check the unidentified communication event by manipulating the first button 137 once. If there are multiple types of unidentified communication events, the unidentified communication events can be sequentially displayed in order determined according to a prescribed reference each time the first button 137 is manipulated once. Also, a wheel function can be provided to the first button 137 so the user can check an unidentified communication event in a forward or backward direction according to a scroll direction of a wheel.

The user can also check an unidentified communication event by pressing the first button 137 for a long time (i.e., a long-touch input). For instance, if the user wants to check a different type of unidentified communication event when they are checking another unidentified communication event, the user can check the different type of unidentified communication event by applying a long-touch input to the first button 137 or by pressing the first button 137 over a prescribed duration. In another example, if the user applies a long touch to the first button 137 when checking a random unidentified communication event, the controller 180 can directly execute a function of entering the unidentified communication event of a preset type.

Thus, because the user does not manipulate a touchscreen to check an unidentified communication event, the controller 180 or user do not have to continually lock and unlock the display 151. In addition, the above-explained methods of unlocking the touchscreen and checking the unidentified communication event using the vector pad can be combined together.

Again, with reference to FIG. 7(b), the user can also touches the missed call displayed item 710, and the controller 180 unlocks the touchscreen and displays a history of unidentified voice calls as shown in FIG. 7(c). The controller 180 can also interrupt the light emission of the light emitting device provided to the vector pad 136 and/or the figure display of the small display device when the user is checking the unidentified events. Then, as shown in FIG. 7(d), when the user completes the checking the history of the unidentified voice calls, the controller 180 removes the indicator 521. However, because a text message remains unchecked, the controller 180 continues to display the indicator 530 indicating the presence of the unidentified text message.

Thereafter, if the user does not perform any input operation for a predetermined period of time, the controller 180 turns off the display 151 and then enables the light emitting device of the vector pad 136 to emit light in the color or pattern corresponding to the unidentified text message again as shown in FIG. 7(d). The controller 180 can also set the touch lock mode.

Next, a method of informing the user of an unidentified communication event using LEDs of the display 151 instead of a light emitting device of the vector pad 136 according to another embodiment of the present invention will be described.

The display 151 includes a liquid crystal display (LCD). The LCD is a non-light-emitting electronic display device (i.e., does not emit light by itself) and thus uses a backlight unit (BLU) as the light source. The BLU is generally a complex structure including a light source, a power circuit for driving the light source and a series of parts for generating planar light.

In addition, the BLU can be categorized into a direct type or an edge type according to how it is arranged in association with an LCD panel. The direct type BLU is located at a back position of the LCD panel for directly applying light from the backside of the LCD panel and include a backlight lamp as a light source, a reflector for reflecting light of the backlight lamp and a diffusing plate for diffusing the reflected light evenly.

The edge type BLU is located at a lateral side of an LCD panel, and light generated from the light source located at the lateral side is applied as planar light to the LCD panel via a light guide plate for guiding the light. The edge type is slimmer the direct type. In addition, a Cold Cathode Fluorescent Lamp (CCFL) has mainly been used as the backlight lamp of the BLU. The CCFL includes a glass tube having its inner side coated with a fluorescent material, electrodes attached to both ends of the glass tube, high-pressure mixed gas and Hg of constant quantity enclosed within the glass tube.

When power is applied to the CCFL, electrons from the electrode collide with Hg to generate UV ray, and the generated UV ray reacts with the fluorescent material to generate visible rays. In this embodiment of the present invention, the CCFL is not used as the BLU, bur rather a plurality of LEDs are used. Further, the BLU using LEDS has lower power consumption, higher color reproducibility and excellent response speed compared to the CCFL. Further, this embodiment of the present invention informs a user of a presence of an unidentified communication event in various ways using the LED BLU.

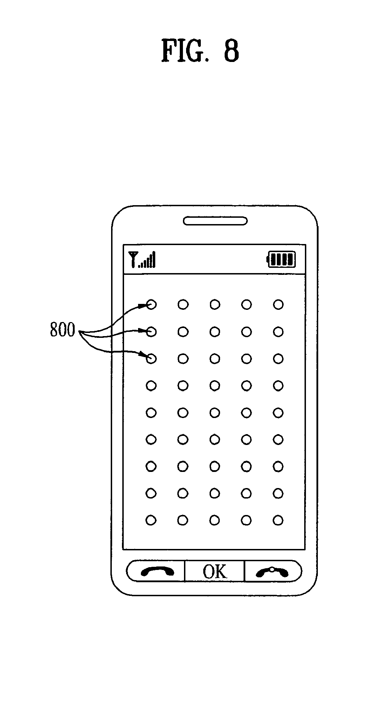

In particular, the present embodiment is similar to embodiments described with reference to FIGs. 2-7, but uses the LED BLU instead of the light emitting device of the vector pad. Further, the user can check an unidentified event by manipulating a random hardware input unit instead of the vector pad. A structure of the LED BLU applicable to the mobile terminal 100 according to the present embodiment will now be explained with reference to FIG. 8.

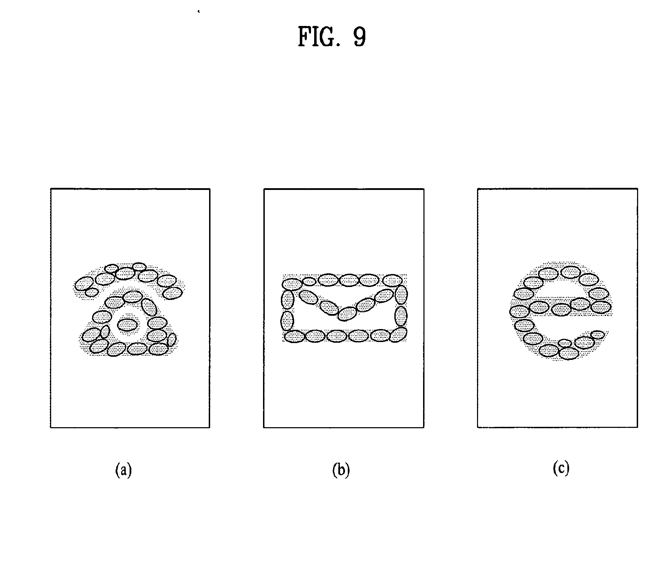

In particular, FIG. 8 is a diagram illustrating a backlight unit using a direct-drop type light emitting diode according to an embodiment of the present invention. Referring to FIG. 8, LEDs 800 are arranged in a check shape to construct a direct type BLU. Further, the controller 180 can control the brightness or flickering of each LED 180 individually to bring about a prescribed visual effect. An example of one visual effect will now be explained with reference to FIG. 9.

As shown in FIG. 9(a), when an unidentified communication event is a voice call, the controller 180 controls the BLU to emit light in a phone shape. Similarly, as shown in FIG. 9(b), when the unidentified communication event is a text message, the controller 180 controls the BLU to emit light in a letter shape, and as shown in FIG. 9(c), when the unidentified communication event is an email, the controller 180 controls the BLU to emit light in a shape of an alphabet 'e'.

Further, FIG. 9 is one example for describing an alternative embodiment of the present invention and can be modified into various shapes. Moreover, a cycle, intensity and pattern of light emission of the BLU can be variously adjusted in consideration of power consumption. In addition, the vector pad 136 is one example including the first and second buttons 137 and 138. However, various types of vector pads are applicable to the present invention.

For instance, the vector pad 136 can have only one button having functions of the first and second buttons 137 and 138 combined together. In particular, a light emitting device and can be provided within one button (single button) and/or a small display device can be provided on a top of the one button (single button), whereby the above-described light-emitting and figure displaying functions can be implemented. Then, if the user presses a center of the vector pad of the single button type downwardly, a same effect of pressing the first button can take place, and if the user presses an edge portion of this vector pad, a same effect of pressing the second button can take place.

The above descriptions refer checking an occurrence of an unidentified event. However, the present invention is not limited to communication events and can also be applied to notification and/or checking method for various kinds of events. For instance, if a point of time or an anniversary preset by a user has come, the controller 180 can inform the user of the advent of the preset time point by using either one of above described methods. For another instance, if a time point of a schedule preset by a user has come, the controller 180 can inform the user of the advent of the predetermined schedule by using either one of above described methods. Namely, various visual effects can be provided to the user according to a type of the alarm/notification event via the vector pad.

Moreover, the user can conveniently check various kinds of events by manipulating the vector pad in such a way as similarly applying the above described methods for checking unidentified communication events. Also, because the user does not have to manipulate the touchscreen to check the various kinds of events, the touchscreen does not have to be locked and unlocked continuously. Moreover, when a plurality of events have occurred, the above described methods for sequentially displaying and checking the events according to a preset priority can be applied similarly.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A mobile terminal, comprising:
a wireless communication unit (110) configured to wirelessly communicate with at least one other terminal;
a display unit (151) configured to display information, wherein said display unit includes a touch screen configured to recognize a touch input from the user;
a user input unit (130) including a hardware input unit having a light emitting device; and
a controller (180) configured to :
lock the touch screen, so that touch input is not recognized, if no user input is received via the user input unit or the touch screen for a predetermined duration or after a prescribed time has passed from an occurrence an unidentified communication event,
dim the display unit after the locking of the touch screen,
control the light emitting device of the hardware input unit to emit light in a predetermined pattern or color while the display unit is dimmed, to inform a user of the mobile terminal about an unidentified received communication event that has not yet been checked by the user, and
display information about the unidentified communication event on the display unit when the user manipulates the hardware input unit.

2. The mobile terminal of claim 1, wherein the predetermined pattern includes continuously emitted light.

3. The mobile terminal of claim 1 or 2, wherein the unidentified communication event comprises at least one of a short text message (SMS), a multimedia message (MMS), a voice mail, an email, a voice call and a video call.

4. The mobile terminal of any one of claims 1 to 3, wherein the light emitting device comprising a plurality of light emitting diode (LEDs) configured to emit a plurality of different colors, and wherein the controller is further configured to control the light emitting device to emit light in one of the plurality of the different colors differing according to a type of the unidentified communication event.

5. The mobile terminal of any one of claims 1 to 4, wherein the hardware input unit includes a navigation key configured to recognize at least four directions including up, down, left and right directions input by the user using the navigation key.

6. The mobile terminal of claim 5, wherein the navigation key includes a pressure sensor configured to recognize the four directions input by the user pressing the navigation key.

7. The mobile terminal of claim 1, wherein the controller is further configured to unlock the touchscreen only if the touch input is related to checking the unidentified communication event when the unidentified communication event is displayed on the touchscreen.

8. The mobile terminal of claim 1, wherein the unidentified event includes a plurality of unidentified events, and wherein the controller is further configured to display information about each unidentified communication event as the user consecutively manipulates the hardware input unit when a list of the plurality of unidentified communication events is displayed on the touch screen.

9. The mobile terminal of claim 8, wherein the controller is further configured to display the information about each unidentified communication event in a consecutive order according to an occurrence order of the unidentified communication event, a priority granted per type of the unidentified communication event and a priority granted per originator of the unidentified communication event.

10. The mobile terminal of any one of claims 1 to 9, wherein the hardware input unit further includes a display device, and wherein the controller is further configured to control the display device to display a figure of a different shape according to a type of the unidentified communication event.

11. The mobile terminal of any one of claims 1 to 10, wherein the controller is further configured to activate the light emitting device of the hardware input unit after a prescribed time expires from an occurrence of the unidentified communication event and when the display unit is turned off.

12. A method of controlling a mobile terminal, the method comprising:
allowing, via a wireless communication unit, wireless communication with at least one other terminal;
locking the touch screen, so that touch input is not recognized, if no user input is received via the user input unit or the touch screen for a predetermined duration or after a prescribed time has passed from an occurrence an unidentified communication event;
dimming the display unit the locking of the touch screen; and
controlling (S402), via a controller, the light emitting device of the hardware input unit to emit light in a predetermined pattern or color while the display unit is dimmed, to inform a user of the mobile terminal about an unidentified received communication event that has not yet been checked by the user; and
displaying (S404), via a display unit, information about the unidentified communication event when the user manipulates the hardware input unit.

13. The method of claim 12, wherein the unidentified communication event comprises at least one of a short text message (SMS), a multimedia message (MMS), a voice mail, an email, a voice call and a video call.

14. The method of claim 12 or 13, wherein the unidentified event includes a plurality of unidentified events, and wherein the method further comprises displaying information about each unidentified communication event on the display unit as the user consecutively manipulates the hardware input unit when a list of the plurality of unidentified communication events is displayed on the display unit.

## Patentansprüche

1. Mobiles Endgerät, umfassend:
eine drahtlose Kommunikationseinheit (110), die zum Kommunizieren mit mindestens einem anderen Endgerät konfiguriert ist;
eine Anzeigeeinheit (151), die zum Anzeigen von Information konfiguriert ist, wobei die Anzeigeeinheit einen Touchscreen beinhaltet, der konfiguriert ist, eine Toucheingabe vom Benutzer zu erkennen;
eine Benutzereingabeeinheit (130), die eine Hardware-Eingabeeinheit mit Licht emittierender Vorrichtung enthält; und
eine Steuerung (180), die konfiguriert ist:
den Touchscreen zu sperren, so dass die Toucheingabe nicht erkannt wird, wenn für eine vorherbestimmte Dauer oder nach Verstreichen einer vorgeschriebenen Zeit ab Eintreten eines nicht identifizierten Kommunikationsereignisses keine Benutzereingabe über die Benutzereingabeeinheit oder den Touchscreen empfangen wird,
die Anzeigeeinheit nach Sperren des Touchscreens zu dimmen,
die Licht emittierende Vorrichtung der Hardware-Eingabeeinheit so zu steuern, dass sie bei gedimmter Anzeigeeinheit Licht in einem vorherbestimmten Muster bzw. Farbe emittiert, um einen Benutzer des mobilen Endgeräts über ein nicht identifiziertes empfangenes Kommunikationsereignis zu informieren, das vom Benutzer noch nicht geprüft wurde, und
Information über das nicht identifizierte Kommunikationsereignis auf der Anzeigeeinheit anzuzeigen, wenn der Benutzer die Hardware-Eingabeeinheit manipuliert.

2. Mobiles Endgerät nach Anspruch 1, wobei das vorherbestimmte Muster kontinuierlich emittiertes Licht beinhaltet.

3. Mobiles Endgerät nach Anspruch 1 oder 2, wobei das nicht identifizierte Kommunikationsereignis mindestens eine kurze Testnachricht (SMS), eine Multimedianachricht (MMS) eine Voicemail, eine Email, ein Sprachanruf und/oder ein Videoanruf ist.

4. Mobiles Endgerät nach einem der Ansprüche 1 bis 3, wobei die eine Mehrzahl von Licht emittierenden Dioden (LEDs) umfassende Licht emittierende Vorrichtung konfiguriert ist, eine Mehrzahl verschiedener Farben zu emittieren, und wobei die Steuerung ferner konfiguriert ist, die Licht emittierende Vorrichtung so zu steuern, dass sie Licht in einer Farbe aus der Mehrzahl verschiedener Farben ausgibt, die sich nach dem jeweiligen Typ des nicht identifizierten Kommunikationsereignisses richtet.

5. Mobiles Endgerät nach einem der Ansprüche 1 bis 4, wobei die Hardware-Eingabeeinheit eine Navigationstaste beinhaltet, die konfiguriert ist, mindestens vier Richtungen, d.h. auf, ab, rechts, links, zu erkennen, die vom Benutzer unter Einsatz der Navigationstaste eingegeben werden.

6. Mobiles Endgerät nach Anspruch 5, wobei die Navigationstaste einen Drucksensor beinhaltet, der konfiguriert ist die vier Richtungen zu erkennen, die vom Benutzer unter Einsatz der Navigationstaste eingegeben werden.

7. Mobiles Endgerät nach Anspruch 1, wobei die Steuerung ferner konfiguriert ist, den Touchscreen nur dann zu entsperren, wenn bei Anzeige des nicht identifizierten Kommunikationsereignisses auf dem Touchscreen die Toucheingabe auf die Prüfung des nicht identifizierten Kommunikationsereignisses bezogen ist.

8. Mobiles Endgerät nach Anspruch 1, wobei das nicht identifizierte Ereignis eine Mehrzahl nicht identifizierter Ereignisse beinhaltet, und wobei die Steuerung ferner konfiguriert ist, Information über jedes nicht identifizierte Kommunikationsereignis anzuzeigen, während unter fortlaufender Manipulierung der Hardware-Eingabeeinheit durch den Benutzer eine Liste der Mehrzahl von nicht identifizierten Kommunikationsereignissen auf der Anzeigeeinheit angezeigt wird.

9. Mobiles Endgerät nach Anspruch 8, wobei die Steuerung konfiguriert ist, die Information über jedes nicht identifizierte Kommunikationsereignis in aufeinanderfolgender Reihenfolge nach Eintretensfolge des nicht identifizierten Kommunikationsereignisses, gewährtem Prioritätstyp des nicht identifizierten Kommunikationsereignisses und gewährter Urheberpriorität des nicht identifizierten Kommunikationsereignisses anzuzeigen.

10. Mobiles Endgerät nach einem der Ansprüche 1 bis 9, wobei die Hardware-Eingabeeinheit ferner eine Anzeigevorrichtung enthält, und wobei die Steuerung ferner konfiguriert ist, die Anzeigevorrichtung so zu steuern, dass je nach Typ des nicht identifizierten Kommunikationsereignisses ein Bild in einer anderen Form angezeigt wird.

11. Mobiles Endgerät nach einem der Ansprüche 1 bis 10, wobei die Steuerung ferner konfiguriert ist, die Licht emittierende Vorrichtung der Hardware-Eingabeeinheit nach Ablauf einer vorherbestimmten Zeit ab eines Eintretens des nicht identifizierten Kommunikationsereignisses, und wenn die Anzeigeeinheit abgeschaltet ist, zu aktivieren.

12. Verfahren zum Steuern eines mobilen Endgeräts, umfassend:
das Gestatten der drahtlosen Kommunikation mit mindestens einem anderen Endgerät über eine drahtlose Kommunikationseinheit;
das Sperren des Touchscreens, so dass die Toucheingabe nicht erkannt wird, wenn für eine vorherbestimmte Dauer oder nach Verstreichen einer vorgeschriebenen Zeit ab Eintreten eines nicht identifizierten Kommunikationsereignisses keine Benutzereingabe über die Benutzereingabeeinheit oder den Touchscreen empfangen wird;
das Dimmen der Anzeigeeinheit nach Sperren des Touchscreens,
das Steuern (S402) der Licht emittierenden Vorrichtung der Hardware-Eingabeeinheit über eine Steuerung derart, dass sie Licht in einem vorherbestimmten Muster bzw. Farbe bei gedimmter Anzeigeeinheit emittiert, um einen Benutzer des mobilen Endgeräts über ein nicht identifiziertes empfangenes Kommunikationsereignis zu informieren, das vom Benutzer noch nicht geprüft wurde; und
das Anzeigen (S404) von Information über das nicht identifizierte Kommunikationsereignis über eine Anzeigeeinheit, während der Benutzer die Hardware-Eingabeeinheit manipuliert.

13. Verfahren nach Anspruch 12, wobei das nicht identifizierte Kommunikationsereignis mindestens eine kurze Textnachricht (SMS), eine Multimedianachricht (MMS), eine Voicemail, eine Email, ein Sprachanruf und/oder ein Videoanruf ist.

14. Verfahren nach Anspruch 12 oder 13, wobei das nicht identifizierte Ereignis eine Mehrzahl von nicht identifizierten Ereignissen beinhaltet, und wobei das Verfahren ferner das Anzeigen von Information über jedes nicht identifizierte Kommunikationsereignis auf der Anzeigeeinheit umfasst, während unter fortlaufender Manipulierung der Hardware-Eingabeeinheit durch den Benutzer eine Liste der Mehrzahl von nicht identifizierten Kommunikationsereignissen auf der Anzeigeeinheit angezeigt wird.

## Revendications

1. Terminal mobile, comprenant :
une unité de communication sans fil (110) configurée pour communiquer sans fil avec au moins un autre terminal ;
une unité d'affichage (151) configurée pour afficher des informations, dans lequel ladite unité d'affichage comprend un écran tactile configuré pour reconnaître une entrée tactile de l'utilisateur ;
une unité d'entrée d'utilisateur (130) comprenant une unité d'entrée matérielle ayant un dispositif électroluminescent ; et
un organe de commande (180) configuré pour :
verrouiller l'écran tactile, de sorte qu'une entrée tactile ne soit pas reconnue, si aucune entrée d'utilisateur n'est reçue par le biais de l'unité d'entrée d'utilisateur ou de l'écran tactile pendant une durée prédéterminée ou après l'expiration d'un temps prescrit à partir d'une survenance d'un événement de communication non identifié,
obscurcir l'unité d'affichage après le verrouillage de l'écran tactile,
commander au dispositif électroluminescent de l'unité d'entrée matérielle d'émettre une lumière dans un motif prédéterminé ou d'une couleur prédéterminée pendant que l'unité d'affichage est obscurcie, pour informer un utilisateur du terminal mobile d'un événement de communication reçu non identifié qui n'a pas encore été consulté par l'utilisateur, et
afficher des informations sur l'événement de communication non identifié sur l'unité d'affichage lorsque l'utilisateur manipule l'unité d'entrée matérielle.

2. Terminal mobile selon la revendication 1, dans lequel le motif prédéterminé comprend une lumière continuellement émise.

3. Terminal mobile selon la revendication 1 ou 2, dans lequel l'événement de communication non identifié comprend au moins l'un parmi un message de texte court (SMS), un message multimédia (MMS), un message vocal, un e-mail, un appel vocal et un appel vidéo.

4. Terminal mobile selon l'une quelconque des revendications 1 à 3, dans lequel le dispositif électroluminescent comprend une pluralité de diodes électroluminescentes (LED), configurées pour émettre une pluralité de couleurs différentes, et dans lequel l'organe de commande est en outre configuré pour commander au dispositif électroluminescent d'émettre une lumière dans l'une de la pluralité de couleurs différentes différant en fonction d'un type de l'événement de communication non identifié.

5. Terminal mobile selon l'une quelconque des revendications 1 à 4, dans lequel l'unité d'entrée matérielle comprend une touche de navigation configurée pour reconnaître au moins quatre directions, parmi lesquelles le haut, le bas, la gauche et la droite, entrées par l'utilisateur en utilisant la touche de navigation.

6. Terminal mobile selon la revendication 5, dans lequel la touche de navigation comprend un capteur de pression configuré pour reconnaître les quatre directions entrées par l'utilisateur en pressant la touche de navigation.

7. Terminal mobile selon la revendication 1, dans lequel l'organe de commande est en outre configuré pour déverrouiller l'écran tactile uniquement si l'entrée tactile est liée à la consultation de l'événement de communication non identifié lorsque l'événement de communication non identifié est affiché sur l'écran tactile.

8. Terminal mobile selon la revendication 1, dans lequel l'événement non identifié comprend une pluralité d'événements non identifiés, et dans lequel l'organe de commande est en outre configuré pour afficher des informations sur chaque événement de communication non identifié alors que l'utilisateur manipule consécutivement l'unité d'entrée matérielle lorsqu'une liste de la pluralité d'événements de communication non identifiés est affichée sur l'écran tactile.

9. Terminal mobile selon la revendication 8, dans lequel l'organe de commande est en outre configuré pour afficher les informations sur chaque événement de communication non identifié dans un ordre consécutif selon un ordre de survenance de l'événement de communication non identifié, une priorité accordée par type de l'événement de communication non identifié et une priorité accordée par initiateur de l'événement de communication non identifié.

10. Terminal mobile selon l'une quelconque des revendications 1 à 9, dans lequel l'unité d'entrée matérielle comprend en outre un dispositif d'affichage, et dans lequel l'organe de commande est en outre configuré pour commander au dispositif d'affichage d'afficher une figure d'une forme différente en fonction d'un type de l'événement de communication non identifié.

11. Terminal mobile selon l'une quelconque des revendications 1 à 10, dans lequel l'organe de commande est en outre configuré pour activer le dispositif électroluminescent de l'unité d'entrée matérielle après l'expiration d'un temps prescrit à partir d'une survenance de l'événement de communication non identifié et lorsque l'unité d'affichage est éteinte.

12. Procédé de commande d'un terminal mobile, le procédé comprenant :
l'autorisation, par le biais d'une unité de communication sans fil, d'une communication sans fil avec au moins un autre terminal ;
le verrouillage de l'écran tactile, de sorte qu'une entrée tactile ne soit pas reconnue, si aucune entrée d'utilisateur n'est reçue par le biais de l'unité d'entrée d'utilisateur ou de l'écran tactile pendant une durée prédéterminée ou après l'expiration d'un temps prescrit à partir d'une survenance d'un événement de communication non identifié ;
l'obscurcissement de l'unité d'affichage après le verrouillage de l'écran tactile ;
la commande (S402), par le biais d'un organe de commande, au dispositif électroluminescent de l'unité d'entrée matérielle d'émettre une lumière dans un motif prédéterminé ou d'une couleur prédéterminée pendant que l'unité d'affichage est obscurcie, pour informer un utilisateur du terminal mobile d'un événement de communication reçu non identifié qui n'a pas encore été consulté par l'utilisateur ; et
l'affichage (S404), par le biais d'une unité d'affichage, d'informations sur l'événement de communication non identifié lorsque l'utilisateur manipule l'unité d'entrée matérielle.

13. Procédé selon la revendication 12, dans lequel l'événement de communication non identifié comprend au moins l'un parmi un message de texte court (SMS), un message multimédia (MMS), un message vocal, un e-mail, un appel vocal et un appel vidéo.

14. Procédé selon la revendication 12 ou 13, dans lequel l'événement non identifié comprend une pluralité d'événements non identifiés, et dans lequel le procédé comprend en outre l'affichage d'informations sur chaque événement de communication non identifié sur l'unité d'affichage alors que l'utilisateur manipule consécutivement l'unité d'entrée matérielle lorsqu'une liste de la pluralité d'événements de communication non identifiés est affichée sur l'unité d'affichage.
